# EUROPEAN PATENT APPLICATION

(11) **EP 2 161 546 A2**
(43) Date of publication of application: **10.03.2010**
(21) Application number: 09252088.1
(22) Date of filing: 28.08.2009
(51) Int. Cl.: G01D 3/02

(54) **Electrical equipment device**

(30) Priority: 03.09.2008 GB 0816033
(71) Applicant: Goodrich Control Systems, Solihull West Midlands B90 4LA (GB)
(72) Inventor: Smout, Peter Douglas, Solihull West Midlands B90 2PU (GB)
(74) Representative: Bailey, Richard Alan

(57) **Abstract**

An electrical equipment device arrangement comprises an electrical equipment device (EED) including an environmental sensor (26, 28, 30), and a processor device (12), the environmental sensor (26, 28, 30) and processor device (12) being operable to monitor the environmental conditions to which the EED has been exposed, and to output signals indicative of the impact of the environmental conditions upon the operability and/or availability of the EED.

## Description

This invention relates to an electrical equipment device, hereafter referred to as an EED, and in particular to an EED suitable for use in harsh environments, for example in aerospace applications.

Where an EED is located in non-pressure controlled and/or non-temperature controlled zones of an aircraft, it will be appreciated that the electrical or electronic components of the equipment have to be capable of withstanding, for example, frequent deep thermal cycling and/or high levels of vibrations. As well as requiring components rated for use in harsh environments, the EED designs need to incorporate alternate packaging arrangements that are typically more complex than the arrangements incorporated on commercial designs. The use of electronic components and packing arrangements that are typically more expensive and complex than those used in commercial designs results in a relatively expensive EED.

It would be desirable to make use of less expensive components and packaging arrangements in order to allow cost savings to be made. However, as the less expensive components and packaging arrangements are not designed or rated for use in harsh environments, there is a risk of increased EED failure rates resulting in increased operational costs due to having to replace equipment more frequently and/or having to undertake unscheduled maintenance operations.

A number of arrangements are known which permit the operability and availability of a system and/or device to be determined, availability being defined, for the purposes of this application, as the proportion of time that a system and/or device is in a functioning condition. For example US 2008/0141072 and US 7308614 describe diagnostics and/or prognostics arrangements operable to output information representative of the operability and availability of a system and/or device. However, these arrangements are of relatively complex form.

It is an object of the invention to provide an arrangement whereby relatively low cost components can be used without at least some of the disadvantages mentioned hereinbefore.

According to the invention there is provided an electrical equipment device arrangement comprising an electrical equipment device (EED) including an environmental sensor, and a processor device, the environmental sensor and processor device being operable to monitor the environmental conditions to which the EED has been exposed, and to output signals indicative of the impact of the environmental conditions upon the operability and/or availability of the EED.

By monitoring the environmental conditions to which the device has been exposed, and comparing data representative of the environmental conditions with known data representative of failure conditions, the operating status of the device can be determined. The operating status may be used to determine for how much longer the device will be available, and so can be used in the scheduling of a replacement.

The environmental sensor may comprise a temperature sensor. In such an arrangement, the stored environmental data may comprise, for example, a count of the number of thermal cycles exceeding a predetermined level, or an indication of for how long the temperature has exceeded a predetermined maximum threshold, or been below a predetermined minimum threshold.

Alternatively or additionally the environmental sensor may be sensitive to the level of vibrations to which the component is exposed, for example comprising an accelerometer. Other environmental conditions, for example air pressure, or electrical stresses such as may occur in the event of a lightning strike or a power surge may also or alternatively be sensed.

The processor may be located in or on the EED, for example close to or adjacent the environmental sensor, and may monitor the sensed environmental conditions in real time. Alternatively, such monitoring may be undertaken by a processor external to the EED. Where located in or on the EED, the processor may also undertake other processing tasks associated with the EED.

The EED of the present invention is advantageous in that components may be provided in the EED which would not normally be considered for use therein. As a result, it may be possible to make substantial cost savings.

The invention also relates to a method of determining the operability and availability of an EED comprising an environmental monitoring device on or in the EED, the method comprising using a processor device to monitor the signals generated, in use, by the environmental monitoring device to produce output signals indicative of the impact of the experienced environmental conditions upon the operability and availability of the EED.

The processor device may be incorporated into the EED, to permit modelling of the effects of the environmental conditions upon the EED on-board the EED, or alternatively may be located remotely, for example comprising a central safety processor unit, processing information for two or more such EEDs.

The modelling technique used may be a health or life usage monitoring technique, for example using an algorithm which counts the number of thermal cycles to which the EED has been subject, and outputs a signal when a predetermined number is approached. Alternatively, rate of change or depth of thermal cycling may be used. Alternatively or additionally, vibrations, air pressure, and/or the occurrence of electrical stresses may be monitored and used.

The invention will further be described, by way of example, with reference to the accompanying drawings, in which:

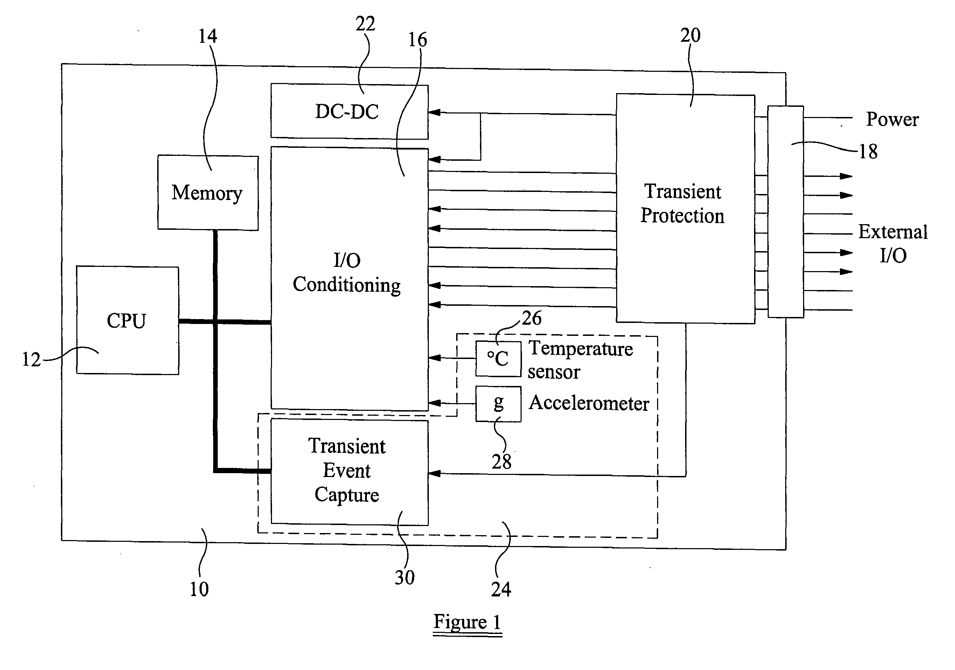

Figure 1 is a diagrammatic illustration of an EED in accordance with one embodiment of the invention.
Figure 2 is a diagrammatic illustration of part of the EED of Figure 1; and
Figure 3 is a block diagram illustrating the algorithm used by the EED.

Referring to the accompanying drawings, the EED arrangement according to one embodiment of the invention comprises a circuit board 10, or other circuit carrying substrate, upon which is mounted a processing unit 12. The processing unit 12 is connected to a memory device 14, the connection being such as to permit data to be read from the memory device 14 and supplied to the processing unit 12, and to permit data to be written to the memory device 14.

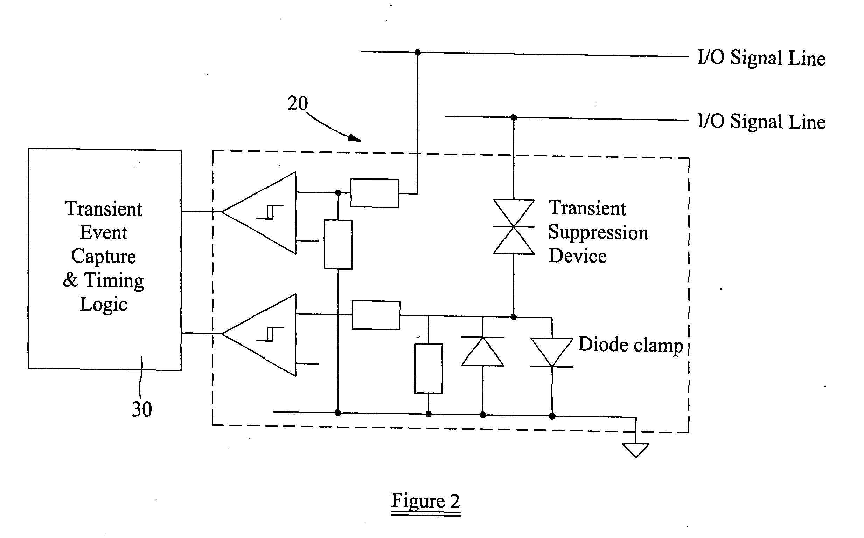

An input/output conditioning unit 16 is mounted upon the circuit board 10, the conditioning unit 16 being connected to the processing unit 12 and to a connector 18 via a transient protection unit 20. The protection unit 20 is illustrated in greater detail in Figure 2. The board 10 further carries a power supply module 22 whereby the conditioning unit 16 and processing unit 12 are supplied with electrical power from the connector 18 via the protection unit 20. In use, input signals supplied via the connector 18 are conditioned and input to the processing unit 12. The processing unit 12 produces output signals based, at least in part, upon the received input signals, which are output via the conditioning unit 16 to the connector 18. The processing unit 12 may be arranged to perform a wide range of functions, for example aircraft control functions, which will not be described herein in further detail.

In accordance with the invention, the EED further includes an environmental monitoring device 24 sensitive to the environmental conditions experienced by the EED. In the embodiment illustrated, the environmental monitoring device 24 comprises a plurality of individual sensors 26, 28, 30 sensitive to different environmental conditions. A first one of the sensors 26 is a temperature sensor, sensitive to the temperature experienced by the EED. A second one of the sensors 28 is an accelerometer sensitive to the magnitude of vibrations experienced by the EED. A third one of the sensors 30 is a transient event capture and timing logic device, and is connected to the transient protection unit 20, monitoring signals produced thereby, to determine whether the EED has been subject to, for example, electrical stress such as the transients which result from lightning strikes, power supply surges or the like. Lightning strike induced transient voltages may be detected by monitoring the duration of conduction of the transient protection unit 20 or by measuring the occurrence of voltages outside of a normal voltage range of the signals being monitored. The outputs of the temperature and acceleration sensors 26, 28 are supplied via the conditioning unit 16 to the processing unit 12 and/or memory device 14. The output of the sensor 30 is supplied directly to the processing unit 12 and/or memory device 14. In an alternative arrangement the transient event capture and timing logic functionality could be incorporated into the design of the programmable logic used by the conditioning unit 16 which could be configured to record the number and duration of transient pulses.

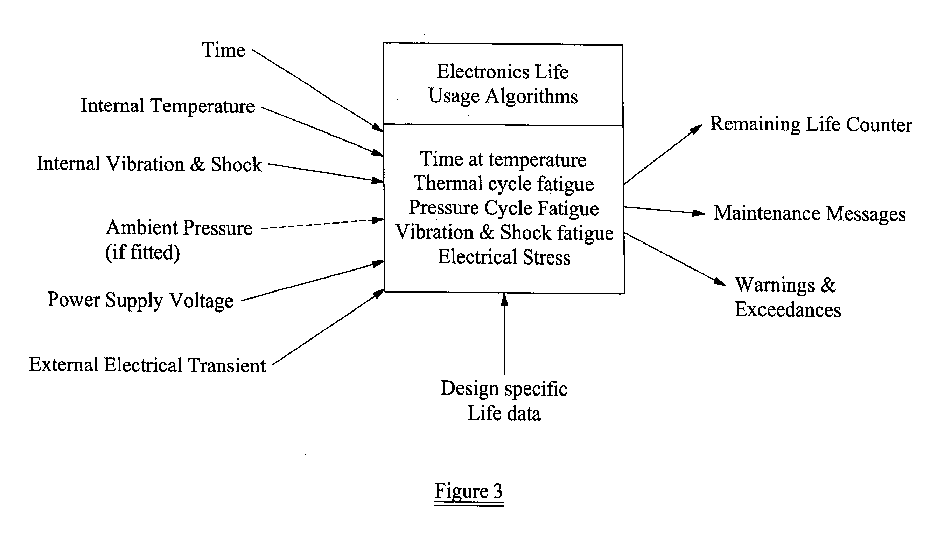

In addition to performing its usual function, the processing unit 12 is programmed to, periodically, monitor the outputs of the sensors 26, 28, 30, storing data representative of the environmental conditions in the memory device 14 and modelling the effects of the experienced environmental conditions on the operational reliability of the components of the EED, using algorithms which model, for example, the parameters indicated in Figure 3. As a result, it is possible to determine whether or not the environmental conditions to which the EED has been or is being subject are likely to adversely affect the operability and availability of the EED.. If it is determined that the environmental conditions experienced by the EED are such that damage is likely to have occurred which, over time, is likely to result in failure of the EED, then a signal representative of this state can be output by the EED and used in the scheduling of replacement of the EED. Such a prognostics approach to enhancing the availability of EEDs may be referred to as health or life usage monitoring.

The modelling algorithms used by the processing unit 12 in a life usage monitoring scheme may operate in a range of ways. For example, where thermal cycling is thought to be an important factor in determining the health of an EED, the output of the temperature sensor 26 may be used by the processing unit 12 to permit the number of thermal cycles to which the EED has been subject to be counted. When the number of thermal cycles experienced by the EED is approaching the number at which it is thought that damage is likely to occur, for example as a result of the failure of solder joints or the like, then the processing unit 12 will output a signal which can be used to indicate that the replacement of the EED needs to be scheduled. If appropriate, only thermal cycles where a predetermined temperature threshold is crossed are counted. Alternatively, the rate of change or depth (amplitude) of thermal cycling can be monitored using the temperature sensor 26 and used as factors in determining the health of the EED. Similar techniques may be used in determining whether vibration stress induced damage is likely to have occurred. The determination of the environmental conditions or factors to which the EED is susceptible, and thresholds at which such damage is likely to have occurred may be determined or validated during testing and development of the EEDs before use, and appropriate information built into the algorithms and/or stored in the memory device.

It will be appreciated that by providing an EED in accordance with an embodiment of the invention, as the environmental conditions experienced by the EED are monitored, relatively low cost components can be used in the EED, reducing the overall cost of the EED. The relatively low cost components can be used as the output of the environmental sensor 24, as processed by the processing unit 12, can be used to determine whether the EED is still operable and available, and to predict for how much longer it is likely to remain operable and available. As a result, safety is not impaired as a result of the use of lower cost components, and replacement can be scheduled at an appropriate point in time, rather than having to undertake unscheduled replacement of the EED after failure, as would occur if the relatively low cost components were used in a typical electronic equipment device.

In the arrangement described hereinbefore, temperature, vibration and electrical stress are the environmental conditions sensed or monitored using the environmental monitoring device 24. It will be appreciated that the invention is not restricted to these conditions alone, and that more or other conditions may be monitored. For example, there may be circumstances in which it is desired to monitor the pressure to which the EED is exposed, in which case an internal pressure sensor may be incorporated into the EED.

Although the arrangement described and illustrated herein uses the processing unit 12 mounted on the board 10 to model the effects of the environmental conditions on the operability and availability of the EED, the modelling may, alternatively, be undertaken by a separate processor located externally of the board 10. This may be particularly advantageous where the invention is used in monitoring the operability and availability of safety critical devices such as dual channel aeroengine control systems. Where undertaken by a separate processor, a dedicated safety processor may be provided to perform this function.

Where an aircraft system incorporates a number of EEDs, or nodes, in accordance with the invention, a central controller, or control node, may be programmed to request status information from each EED or node to permit the overall system status to be determined. The controller or control node can determine or assess the remaining life of each EED or node and, depending upon the nature of the overall system, may be able to reconfigure at least part of the system in order to reduce the likelihood of system disruption or failure, allowing maintenance to be deferred.

A number of other modifications or alterations may be made to the arrangements described hereinbefore without departing from the scope of the invention.

## Claims

1. An electrical equipment device arrangement comprising an electrical equipment device (EED) including an environmental sensor (26, 28, 30), and a processor device (12), the environmental sensor (26, 28, 30) and processor device (12) being operable to monitor the environmental conditions to which the EED has been exposed, and to output signals indicative of the impact of the environmental conditions upon the operability and/or availability of the EED.

2. An arrangement according to Claim 1, wherein the processor device (12) is within the EED and also performs processing tasks normally associated with the EED.

3. An arrangement according to Claim 1 or Claim 2, wherein the processor device (12) monitors the sensed environmental conditions in real time.

4. An arrangement according to Claim 1, wherein the processor device (12) is located externally of the EED.

5. An arrangement according to any of the preceding claims, wherein the impact of the environmental conditions to which the device has been exposed is determined by comparing data representative of the environmental conditions with known data representative of failure conditions.

6. An arrangement according to Claim 5, wherein the impact is used to derive an operating status of the device.

7. An arrangement according to Claim 6, wherein the operating status is used to determine for how much longer the device will be available.

8. An arrangement according to any of Claims 1 to 7 wherein the environmental sensor (26, 28, 30) comprises a temperature sensor (26), a vibration sensor (28), a pressure sensor and/or an electrical stress sensor (30).

9. A method of determining the operability and/or availability of an EED comprising an environmental monitoring device (26, 28, 30) on or in the EED, the method comprising using a processor device (12) to monitor the signals generated, in use, by the environmental monitoring device (26, 28, 30) and to produce output signals indicative of the impact of the experienced environmental conditions upon the operability and availability of the EED.

10. A method according to Claim 9, wherein the processor device (12) is incorporated into the EED.

11. A method according to Claim 9, wherein the processor device (12) is located remotely of the EED.

12. A method according to any of Claims 9 to 11, wherein the processor device (12) uses a health or life usage monitoring algorithm.

13. A method according to Claim 12, wherein the health or life usage monitoring algorithm counts the number of thermal cycles to which the EED has been subject, and outputs a signal when a predetermined number is approached.

14. A method according to Claim 12 or Claim 13, wherein the rate of change or depth of thermal cycling are used by the algorithm.

15. A method according to Claim 12, wherein vibrations, air pressure, and/or the occurrence of electrical stresses are monitored and used in the algorithm.
